Europäisches Patentamt

European Patent Office

Office européen des brevets

(19)

(11) Veröffentlichungsnummer: **0 249 892**
**B1**

(12) ## EUROPÄISCHE PATENTSCHRIFT

(45) Veröffentlichungstag der Patentschrift:
24.01.90

(51) Int. Cl.⁴: **B23B 29/034**

(21) Anmeldenummer: 87108458.8

(22) Anmeldetag: 11.06.87

(54) Ausdrehwerkzeug.

(30) Priorität: 20.06.86 DE 3620696

(43) Veröffentlichungstag der Anmeldung:
23.12.87 Patentblatt 87/52

(45) Bekanntmachung des Hinweises auf die Patenterteilung:
24.01.90 Patentblatt 90/4

(84) Benannte Vertragsstaaten:
CH ES FR GB IT LI

(56) Entgegenhaltungen:
DE-A- 2 264 912
DE-A- 2 354 158
FR-A- 1 266 970
FR-A- 2 320 459
FR-A- 2 444 839
GB-A- 1 187 956

TRANSACTIONS OF THE ASME, JOURNAL OF
LUBRICATION TECHNOLOGY, Band 99, Nr. 4,
Oktober 1977, Seiten 401-406; T. TSUKIZOE et al.:
"Wear mechanism of unidirectionally oriented
fiber-reinforced plastics"

(73) Patentinhaber: Emil Wohlhaupter & Co.,
D-7443 Frickenhausen(DE)

(72) Erfinder: Wohlhaupter, Gerhard, Dr.Gmünder-Strasse 7,
D-7443 Frickenhausen(DE)
Erfinder: Gähr, Harold, Schumannhof 2,
D-7443 Frickenhausen(DE)

(74) Vertreter: Hoeger, Stellrecht & Partner,
Uhlandstrasse 14 c, D-7000 Stuttgart 1(DE)

## Beschreibung

Die Erfindung betrifft ein Ausdrehwerkzeug nach dem Oberbegriff des Patentanspruchs 1.

Ein solches Ausdrehwerkzeug ist aus FR-A 1 266 970 bekannt. In DE-A 2 354 158 ist eine Lagerung zur radialen und axialen Abstützung eines drehbaren Bauteils in einer Bohrung beschrieben, wobei die Lagerung aus einem eingegossenen Kunststoff-Gleitbelag besteht, der in eine Nut des drehbaren Bauteils eingreift.

Es ist Aufgabe der Erfindung, ein gattungsgemäßes Ausdrehwerkzeug nach FR-A 1 266 970 baulich zu vereinfachen und die Gleitführung des Werkzeugschlittens so auszubilden, daß sie nicht nur ein Radial- und Axiallager für die Mikrometerschraube bietet, sondern noch weitere Funktionen übernimmt.

Die Aufgabe wird erfindungsgemäß durch die kennzeichnenden Merkmale des Patentanspruchs 1 gelöst.

Der Kunststoff-Gleitbelag erfüllt dabei insgesamt vier Funktionen: er bildet ein Radiallager für die Mikrometerschraube, er bildet gleichzeitig ein Axiallager für diese Schraube, er dient der Gleitführung für den Werkzeugschlitten und vermittelt schließlich eine Lagefixierung für ein Betätigungsglied der Drehsicherung.

Bevorzugte Ausführungsformen der Erfindung sind Gegenstand der Unteransprüche 2 und 3.

Die nachstehende Beschreibung bevorzugter Ausführungsbeispiele der Erfindung dient im Zusammenhang mit beiliegender Zeichnung der weiteren Erläuterung. Es zeigen:

Fig. 1 eine Axialschnittansicht eines Ausdrehwerkzeuges mit axial abgestützter Mikrometerschraube;

Fig 2 eine Teilschnittansicht entlang der Linie 2-2 in Fig. 2 und

Fig. 3 eine Einzeldarstellung im Bereich A der Fig. 1.

Auf der Zeichnung ist ein übliches Ausdrehwerkzeug 1 in verschiedenen Schnittansichten dargestellt. Das Ausdrehwerkzeug 1 umfaßt einen Werkzeugkörper 2, der mittels eines Schaftes 3 in ein drehend angetriebenes Futter einer Werkeugmaschine eingespannt werden kann. Eine kreiszylindrische Bohrung 10 im Körper 2 ist in an sich bekannter Weise mit einem eingegossenen oder eingepreßten Kunststoff-Gleitbelag 4 ausgekleidet, der über eine Riefung 5 od. dgl. fest mit der Innenwand der Bohrung 10 verhaftet ist. In der vom Kunststoff-Gleitbelag 4 umschlossenen, ebenfalls kreiszylindrischen Bohrung 6 ist ein Werkzeugschlitten 7 quer zur Drehachse 8 des Werkzeuges gleitverschieblich. Der Schlitten 7 weist eine Bohrung 9 auf, in welche eine Schraube 11 eindrehbar ist. Die Schraube 11 dient der Befestigung eines Werkzeugträgers 12 am Schlitten 7. Am Werkzeugträger 12 ist seinerseits ein übliches Schneidwerkzeug in Gestalt einer Schneidplatte 13 od. dgl. befestigt. Durch entsprechendes Verschieben des Werkzeugschlittens 7 quer zur Drehachse 8 kann der Ausddrehradius des Werkzeuges 13 eingestellt werden.

In eine weitere, zur Bohrung 9 koaxiale Bohrung 14 des Werkzeugschlittens 7 ist eine Buchse 15, z.B. durch Einklebung, fest eingesetzt. Die Buchse 15 weist ein sehr feines Innengewinde, von beispielsweise 0,25 mm Steigung pro Umlauf auf. Mit dem Innengewinde der Buchse 15 steht das entsprechende Außengewinde am Schaft 16 einer Mikrometerschraube 17 in Eingriff, deren Kopf mit 18 bezeichnet ist. Wenn die Mikrometerschraube 17 gedreht und dabei axial fixiert wird, verschiebt sich der Schlitten 7 und damit das Werkzeug 13 quer zur Drehachse 8.

Im Bereich des Kopfes 18 der Mikrometerschraube 17 ist die Bohrung 10 entsprechend erweitert. Der Kunststoff-Gleitbelag 4 erstreckt sich in diese Erweiterung hinein und umhüllt den Kopf 18 teilweise, wobei an der ebenen, senkrecht zum Schaft 16 verlaufenden Rückseite 20 des Kopfes 18 eine Schulter 30 gebildet ist, an der die Rückseite 20 anliegt.

Eine axiale Fixierung oder Axiallagerung der Mikrometerschraube 17 erfolgt erfindungsgemäß in der Weise, daß am Kopf 18 der Mikrometerschraube 17 eine rings umlaufende Ringnut 21 ausgebildet ist, in welche ein komplementär ausgebildeter, vom Kunststoff-Gleitbelag 4 nach einwärts abstehender Ringwulst 22 eingreift. Anstelle einer einzigen Ringnut 21 und eines einzigen Ringwulstes 22 können auch mehrere, axial nebeneinanderliegende Nuten und Wulste vorgesehen werden.

Der Wulst 22 wird in einfacher Weise dadurch gebildet, daß die Mikrometerschraube 17 und der Schlitten 7 in der Bohrung 3 des Werkzeugkörpers 2 fixiert werden und hierauf der Kunststoff-Gleitbelag 4 eingegossen oder eingepreßt wird. Der Gleitbelag 4 füllt dabei alle ihm zur Vergügung stehenden Hohlräume aus und dringt insbesondere auch in die Ringnut 21 ein, wodurch sich der erwünschte Formschluß und die axiale Fixierung der Mikrometerschraube 17 von alleine ergeben. Der Kopf 18 der Mikrometerschraube 17 und der Schlitten 7 wird vor dem Einfüllen des Kunststoff-Gleitbelages in bekannter Weise mit einem Trennmittel, beispielsweise ein Silikonöl, beschichtet, so daß sich der Belag nur mit dem Körper 2 des Werkzeuges verhaftet, der Kopf 18 der Mikrometerschraube aber und der Schlitten 7 im Belag beweglich bleiben.

Es ist offensichtlich, daß diese Art einer Axiallagerung außerordentlich einfach herzustellen ist, weil sie sich automatisch bei dem ohnehin vorzunehmenden Einbringen des Kunststoff-Gleitbelages 4 ergibt. Die beschriebene Axiallagerung ist aber nicht nur in einfachster Weise herstellbar sondern auch überaus genau und widerstandsfähig. Es hat sich gezeigt, daß die erzielbare Genauigkeit im Mikrometer-Bereich, beispielsweise bei $1\mu m$ liegt, und der in die Ringnut 21 eingreifende Ringwulst 22 des Kunststoff-Gleitbelags 4 Kräften von mehreren hundert Kilogramm ohne weiteres widersteht.

Als Kunststoff-Gleitbelag hat sich eine für diesen Zweck übliche Zweikomponenten-Kunstharzmasse auf Epoxidharzbasis mit geeigneten Füllstoffen als brauchbar erwiesen. Offenbar sind derartige Massen nicht nur radial sondern auch axial in erheblichem Maße belastbar, ohne an Formbeständigkeit einzubüßen.

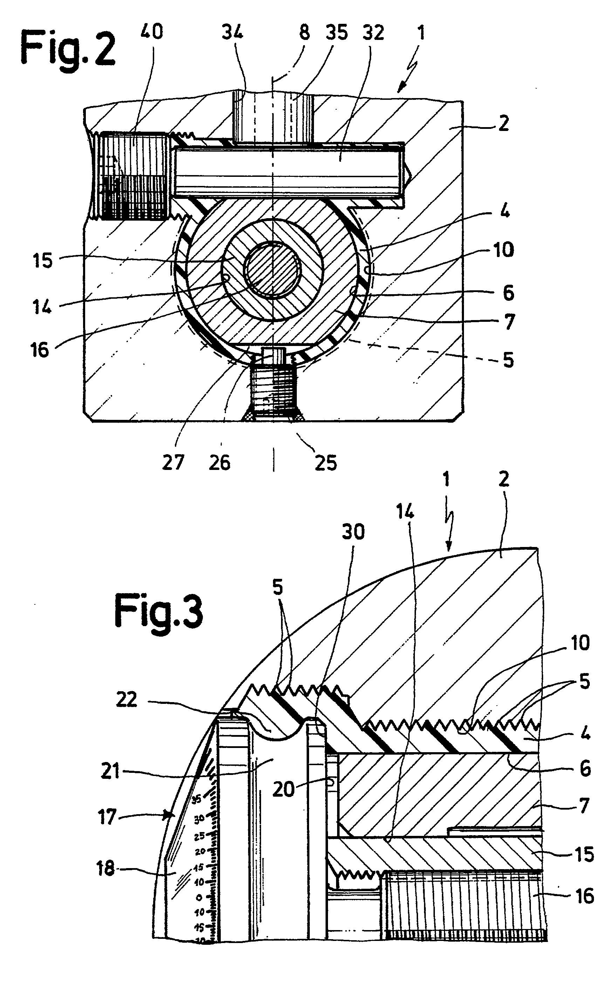

Von besonderem Vorteil ist es, wenn die Querschnittsformen von Ringnut 21 und Ringwulst 22 kreissegmentförmig ausgebildet werden, wobei das Segment vorzugsweise etwas kleiner als ein Halbkreis ist, vgl. Fig. 3. Bei dieser Querschnittsform können nämlich die radial von der Ringnut 21 in den Ringwulst 22 eingeleiteten Kräfte sich bis zur gegenüberliegenden Fläche des Werkzeugkörpers 2 fortpflanzen, mit welcher der Gleitbelag verhaftet ist. An dieser Fläche finden die Kräfte dann ihr Widerlager.

Bei der dargestellten Ausführungsform eines Ausdrehwerkzeuges 1 ist der Hub des Werkzeugschlittens 7 durch eine Schraube 25 begrenzt, die mit einem Fortsatz 26 in eine axial verlaufende Nut 27 am Außenumfang des Schlittens 7 eingreift.

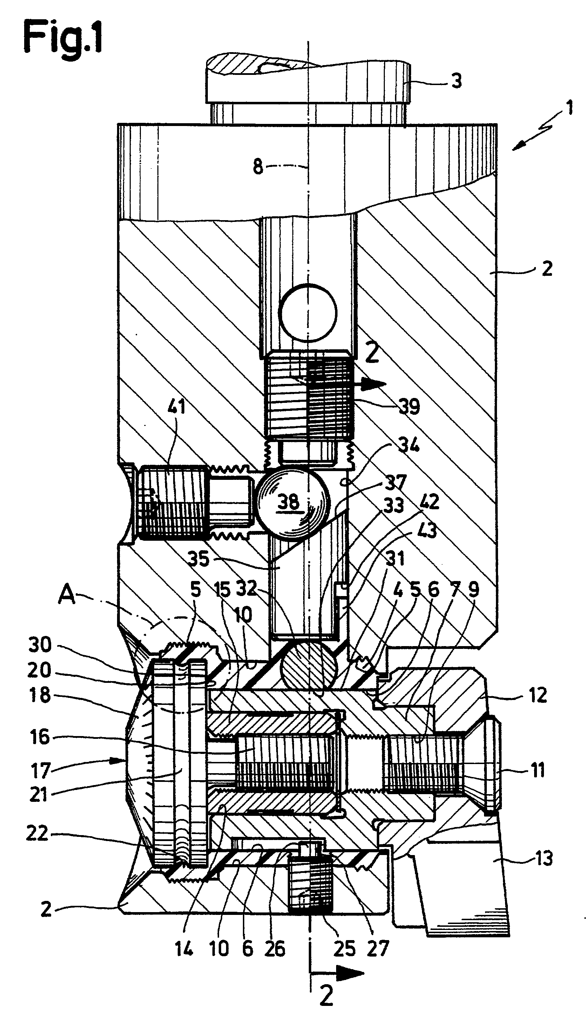

Der Werkzeugschlitten 7 weist an seiner in Fig. 1 und 2 oben liegenden Seiten eine ebene Abflachung 31, an welcher ein quer zur Verschiebeachse des Schlittens 7 angeordneter Bolzen 32 mit einer Abflachung 33 anliegt. Dieser Bolzen 32 dient als Verdrehungssicherung für den Schlitten 7 in der Bohrung 6 und ist durch eine Schraube 40 im Werkzeugkörper 2 gesichert (Fig. 2). Wie dargestellt, umhüllt der Kunststoff-Gleitbelag 4, der mit seiner Innenwand das Gleitlager für den Werkzeugschlitten 7 bildet, nicht nur diesen Schlitten sondern auch den Bolzen 32, wobei der Belag 4 im Bereich der Abflachung 33 ausgespart ist.

In einer axialen Bohrung 34 des Werkzeugkörpers 2 ist ein Bolzen 35 verschieblich gelagert, der mit seiner einen Stirnfläche am Bolzen 32 angreift. Die gegenüberliegende Endfläche 37 des Bolzens 35 ist schräg ausgebildet. An ihr liegt eine Kugel 38 an, die durch einen in den Körper 2 eingeschraubten Bolzen 39 an einer axial zum Schaft 3 hin gerichteten Bewegung gehindert ist. Durch Verdrehen eines weiteren Schraubbolzens 41 im Werkzeugkörper 2 kann die Kugel 38 auf der Schrägfläche 37 verschoben werden, so daß der Bolzen 35 auf den Bolzen 32 gedrückt wird. Hierdurch wird der Bolzen 32 seinerseits gegen den Schlitten 7 gepreßt und hindert diesen an einer Verschiebung und Drehung in der Bohrung 6 des Gleitbelags 4. Vor einer Verstellung des Schlittens 7 mit Hilfe der Mikrometerschraube 17 wird der Schraubbolzen 41 und damit die beschriebene Verdrehungssicherung gelöst, so daß der Schlitten 7 in der Bohrung 6 frei verschieblich ist.

Wie in Fig. 1 dargestellt, weist der Bolzen 35 eine Aussparung 42 auf. In diese Aussparung ist ein Teil 43 des den Kunststoff-Gleitbelag 4 bildenden Materials bei dessen Eingießen miteingedrungen. Dieser Teil 43 des Gleitbelages 4 bildet im Zusammenwirken mit der Aussparung 42 eine Lagefixierung des Bolzens 35 und hindert diesen an einer Verdrehung, so daß die Schrägfläche 37 ihre Lage relativ zur Kugel 38 nicht verändern kann. Der einstückig in den Werkzeugkörper 2 eingegossene Kunststoff-Gleitbelag 4 vermittelt bei dem hier beschriebenen Ausführungsbeispiel somit insgesamt drei Funktionen: er bildet einmal die Gleitführung für den Werkzeugschlitten 7, er dient im Bereich der Ringnut 21 als Axiallager für die Mikrometerschraube 17 und er vermittelt weiterhin eine Lagefixierung des Bolzens 35, der seinerseits das Betätigungsglied für die vom Bolzen 32 gebildete Drehsicherung ist.

Im Bereich des Kopfes 18 der Mikrometerschraube 7 bildet der Kunststoff-Gleitbelag 4 selbstverständlich gleichzeitig auch ein Radiallager für diesen Kopf.

Es ist selbstverständlich, daß das hier beschriebene, vom Kunststoff-Gleitbelag 4 gebildete Axiallager (Nut 21/ Wulst 22) nicht unbedingt mit einem axialen Gleitlager (für den Schlitten 7) verbunden zu werden braucht. Am Beispiel des Kopfes 18 der Mikrometerschraube 17 ist deutlich ersichtlich, wie an einer einfachen Drehlagerung sowohl eine radiale als auch axiale Abstützung stattfindet.

## Patentansprüche

1. Ausdrehwerkzeug (1) mit einer Lagerbohrung (10), mit einer in dieser Lagerbohrung angeordneten Gleitführung, mit einem in der Gleitführung verschieblichen Werkzeugschlitten (7), mit einer in der Lagerbohrung drehbaren und mit dem Werkzeugschlitten in Eingriff stehenden Mikrometerschraube (17), für deren Kopf (18) die Gleitführung ein Radiallager bildet, und mit einem an der Gleitführung vorgesehenen Fixierungsorgan, das in eine Ringnut (21) im Kopf (18) der Mikrometerschraube (17) formschlüssig eingreift und hierdurch ein Axiallager für die Mikrometerschraube bildet, mit einer Drehsicherung (32) für den Werkzeugschlitten und mit Mitteln (35, 38, 41) zum Feststellen des Werkzeugschlittens in der Gleitführung, dadurch gekennzeichnet, daß die Gleitführung von einem einstückig zwischen die Lagerbohrung (10) und die Mikrometerschraube (17) eingegossenen Kunststoff-Gleitbelag (4) gebildet ist, der zur Ausbildung des Axiallagers mit einer Ringwulst (22) in die Ringnut (21) der Mikrometerschraube (17) eingreift, daß der Kunststoff-Gleitbelag (4) im Bereich des Werkzeugschlittens (7) zwecks Einfügung der Drehsicherung (32) ausgespart ist, und daß der Kunststoff-Gleitbelag (4) eine Lagefixierung für ein Betätigungsglied (35) der Drehsicherung (32) bildet.

2. Ausdrehwerkzeug nach Anspruch 1, dadurch gekennzeichnet, daß die Ringnut (21) eine kreissegmentförmige Querschnittsfläche hat.

3. Ausdrehwerkzeug nach Anspruch 1 oder 2, dadurch gekennzeichnet, daß der Kunststoff-Gleitbelag (4) eine Zweikomponenten-Kunstharzmasse auf Epoxidharzbasis mit geeigneten Füllstoffen ist.

## Claims

1. A boring tool (1) having a bearing bore (10) with a sliding guide arranged in this bearing bore and with a tool slide (7) able to shift in the slinding guide, having a micrometer screw (17) which is turnable in the bearing bore and engages with the tool slide and for the head (18) of which the sliding guide forms a radial bearing, and having a locator member provided on the sliding guide, which engages with a close fit in an annular groove (21) in the head (18) of the micrometer screw (17) and hereby forms an axial bearing for the micrometer screw, having an antiturning device (32) for the tool slide and having means (35, 38, 41) for securing the tool slide in the sliding guide, characterized in that the sliding guide is formed by a plastics sliding lining (4) cast between the bearing bore (10) and the micrometer screw (17) in one piece which to form the axial bearing engages by an annular bead (22) in the annular groove (21) in the micrometer screw (17), that in the region of the tool slide (7) the plastics sliding lining (4) is hollowed out for the purpose of fitting in the ani-turning device (32), and that the plastics sliding lining (4) forms a locator for an actuator member (35) of the antiturning device (32).

2. A boring tool as in Claim 1, characterized in that the area of cross-section of the annular groove (21) has the shape of a segment of a circle.

3. A boring tool as in Claim 1 or 2, characterized in that the plastics sliding lining (4) is a two-component synthetic resin compound on an epoxy resin base with suitable fillers.

**Revendications**

1. Outil d'alésage (1) comportant un alésage de positionnement (10), un organe de guidage à glissement disposé dans cet alésage de positionnement, un chariot porte-outil (7) coulissant dans l'organe de guidage à glissement, une vis micrométrique (17) pouvant tourner dans l'alésage et engagée avec le chariot porte-outil, pour la tête (18) de laquelle l'organe de guidage à glissement forme un palier radial, et un organe de blocage prévu sur l'organe de guidage à glissement lequel s'engage par conformité de formes dans une gorge annulaire (21) de la tête (18) de la vis micrométrique (17) et forme ainsi un palier de butée pour la vis micrométrique, un organe de blocage en rotation (32) du chariot porte-outil et des moyens (35, 38, 41) pour immobiliser le chariot porte-outil dans l'organe de guidage à glissement, caractérisé en ce que l'organe de guidage à glissement est formé par un revêtement de glissière en matière plastique (4) coulé en une seule pièce entre l'alésage (10) et la vis micrométrique (17), qui, pour former le palier de butée, s'engage par un bourrelet annulaire (22) dans la gorge annulaire (21) de la vis micrométrique (17), en ce que le revêtement de glissement en matière plastique (4) présente dans la zone du chariot porte-outil (7) un évidement pour y insérer l'organe de blocage en rotation (32), et en ce que le revêtement de glissière en matière plastique (4) forme un organe de fixation de position pour un organe de commande (35) de l'organe de blocage en rotation (32).

2. Outil d'alésage selon la revendication 1, caractérisé en ce que la gorge annulaire (21) a une section transversale en forme de segment de cercle.

3. Outil d'alésage selon la revendication 1 ou 2, caractérisé en ce que le revêtement de glissière en matière plastique (4) est une matière a mouler en résine synthétique à deux constituants à base de résine époxy avec des charges appropriées.

# Fig.1

Fig.2

Fig.3